# EUROPEAN PATENT SPECIFICATION

(11) **EP 1 028 281 B1**
(45) Date of publication and mention of the grant of the patent: **28.04.2004**
(21) Application number: 00200414.1
(22) Date of filing: 08.02.2000
(51) Int. Cl.: F16L 19/075

(54) **High tensile strenght coupling**
Rohrkopplung mit hoher Zugfestigkeit
Raccord de tuyauterie avec résistance à la traction élevée

(30) Priority: 12.02.1999 NL 1011282
(43) Date of publication of application: 16.08.2000
(73) Proprietor: H.A. Prince Beheer Bergen op Zoom B.V., 4691 RX Tholen (NL)
(72) Inventor: Prince, Hendrikus Andreas, 4624 CP Bergen op Zoom (NL)
(74) Representative: Hoorweg, Petrus Nicolaas

(56) References cited:
- EP-A- 0 583 707
- DE-A- 3 834 379
- FR-A- 2 334 046
- US-A- 1 927 390

## Description

The present invention relates to a device for connecting in a tensively strong manner two oppposite, tubular ends of pipes for gas or liquid, said device comprising a sleeve with a screw thread, being fitted with clearance over each said pipe-, end, and a pair of nut bodies each embodied with a co-acting screw thread and having an inner periphery narrowing towards the outside for receiving an axially split clamping ring.

Many proposals have already been made in practice in respect of tensively strong couplings for in-line mutual coupling of tubular ends, as for instance disclosed in EP-A-0583707. These ends can be ends of pipes but also connecting stubs of valves and the like. The problem in connecting these tubular ends is that due to the operating pressure of the medium in the pipe system the coupling will tend to come loose, which problem occurs even more in T-junctions and bends. However, the external pressure caused by the clamping ring in the sleeve arranged around the tubular ends with the nut body cannot be increased without limit since the tubular ends may be deformed.

The invention has for its object to provide a tensively strong coupling, wherein the axial tensile force is absorbed without having to apply an excessive clamping force.

The tensively strong coupling according to claim 1 is characterized in that an or each axial gap of the clamping ring is provided with a resiliently yielding bridge piece such that the ring narrows in diameter by rotating the nut body against the sleeve.

Owing to this improved clamping ring it is possible to mount the tubular ends with negligible axial damage (scratches) since the initial diameter of the clamping ring is greater than the maximum tube tolerances.

The desired initial diameter of the clamping ring is obtained due to the resilient bridge parts of the ring which cause the clamping ring to be well open during insertion of the tubular end into the sleeve. While in the case of plastic tubular ends the two axial gaps prevent over-extreme loading of the plastic by too great a deformation and excessive plastic deformation being caused in the tubular end such that the long-term behaviour of the plastic end could be adversely affected.

In a particular embodiment the gap takes a stepped form and forms stop surfaces adjacently of the bridge piece such that the minimum diameter is thereby determined even more accurately.

Because the clamping ring can be pushed freely over the tubular ends for assembly purposes, the inner surface of the ring can be provided without problem with a toothing or like friction-increasing means, since this toothing leaves no axial traces on the tubular ends during this assembly. The toothing only comes into contact with the tube surface through tightening of the nut body.

In order to reduce the friction between the nut body and the clamping ring, this latter is preferably provided on the outer side with peripheral grooves which can have a rounded form on the outside.

The invention will be further elucidated in the description hereinbelow of two embodiments. In the drawing:
fig. 1 shows a perspective view of two mutually abutting tubular ends, around which is arranged a tensively strong coupling device according to the invention,
fig. 2 shows a perspective view corresponding with fig. 1 wherein the components are exploded,
fig. 3 is a perspective view on enlarged scale of a part of the device of fig. 1,
fig. 4 is a perspective view corresponding with fig. 3 with exploded parts, wherein the clamping ring is modified,
fig. 5 is an axial view of a triple split ring according to the invention.

Corresponding components are designated in the figures with the same reference numerals.

Each tubular end lying mutually in line is designated B. Sleeve 1 is arranged around the tubular ends, which sleeve is provided in the middle with a stop edge 2, so that the tubular ends can be pushed over the same distance into the sleeve. On the inner side of the sleeve is arranged a sealing ring 3 which is received in a groove 4 recessed into the inner surface of the sleeve.

Arranged on the outer side on both sides is a screw thread 5 onto which can be rotated a nut body 6 which is likewise provided with a co-acting screw thread on the inner side.

Nut body 6 has an inner surface 7 converging outwardly such that a wedge-shaped chamber is formed by the inner surface 7 of nut body 6 and the outer surface of tube B. A clamping ring 8 according to the invention is received in this chamber.

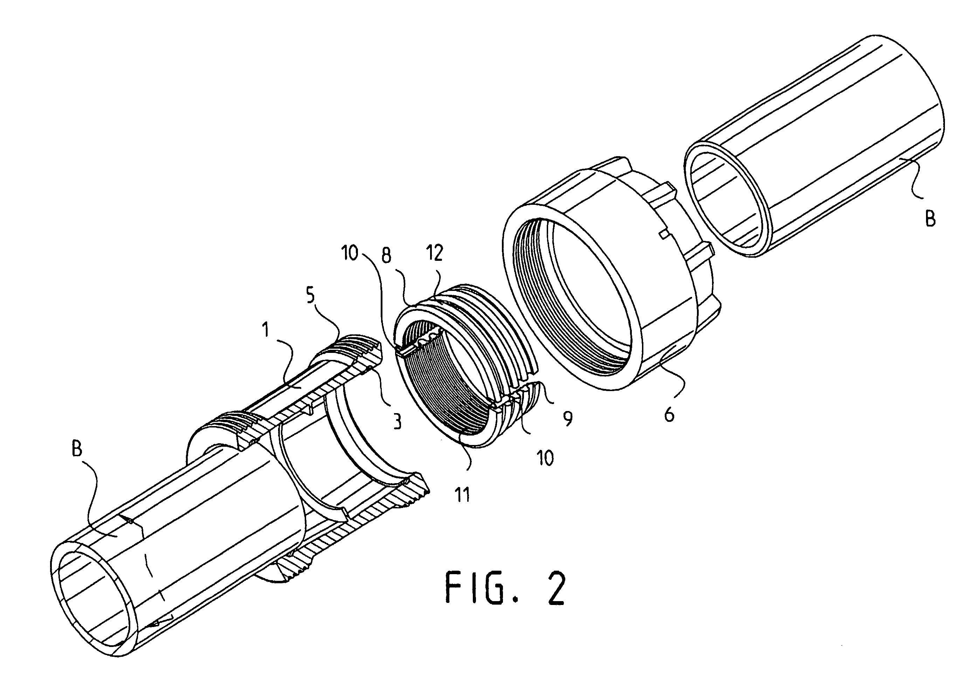

Assembly of the different components takes place as follows. Clamping ring 8 is placed loosely into the nut body beforehand, whereafter 50% of the nut body is rotated onto the sleeve. Clamping ring 8 will herein not be loaded and retains its maximum inner diameter. Tubular end B is then pushed from top right in fig. 2 through nut body 6 and clamping ring 8 into the right-hand part of sleeve 1. Finally, nut body 6 is fastened more tightly onto the sleeve. Owing to the inclining inner surface of nut body 6 the clamping ring 8 is then pressed in a manner to be further elucidated below against the outer surface of tubular ends B. It is noted that in fig. 2 the left-hand tubular end B is drawn without clamping ring 8 and nut body 6, but these components are likewise arranged thereon in the same manner as described above. A tensively strong coupling is thus created between tubular ends B.

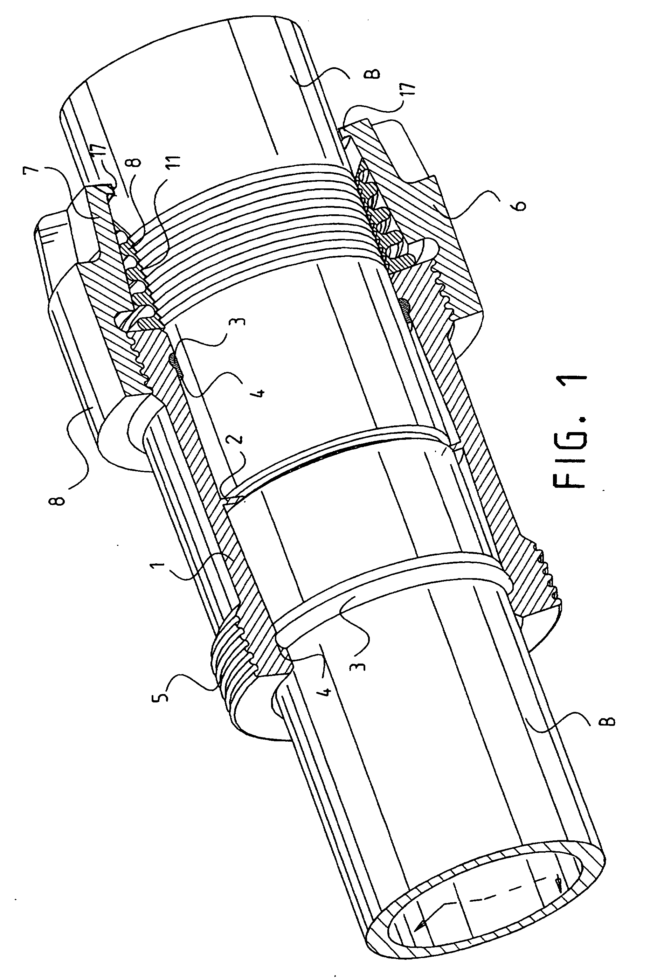

The clamping ring according to an embodiment of the invention is provided with one or more gaps 9, wherein a bridge piece 10 is arranged in the leading part of clamping ring 8. This bridge piece preferably has a U-shaped form and is of flexible strip material. If the ring is manufactured from plastic, the bridge piece 10 can then be formed integrally with the ring. Bridge piece 10 is flexible, which means that in the unloaded situation it presses apart the two halves of ring 8 in fig. 2. However, owing to the pressure force of nut body 6 the halves can move freely toward each other and be clamped onto the outer surface of tubular end B. For the desired clamping action the ring can be provided on the inner side with a toothing 11 which presses into the outer surface during clamping, see fig. 1. a firm, tensively strong coupling is hereby realized. Toothing 11 is however held well outside the outer surface of tubular ends B during assembly so that no axial traces or other damage occur on the tubular end which could result in leakage. The tubular end therefore remains clean and can be readily sealed by rubber ring 3. Friction-increasing means other than a toothing are also possible.

Arranged on the outside of clamping ring 8 is at least one peripheral groove 12 which is rounded on the outer side. This reduces the friction between the inner surface 7 of nut body 6 and the clamping ring 8 so that clamping ring 8 does not begin to co-rotate with nut body 6.

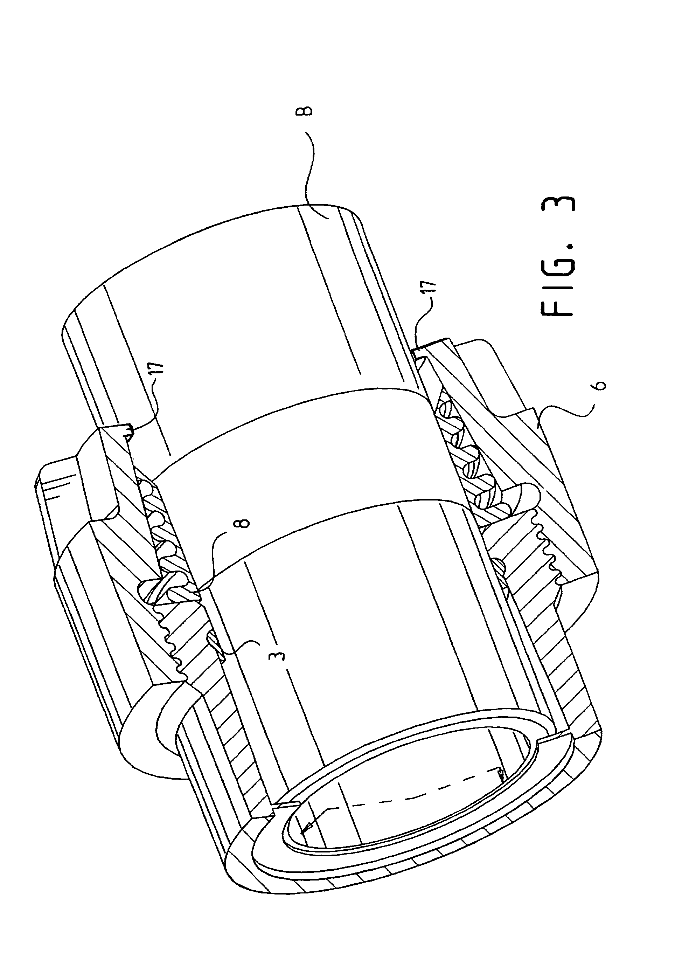

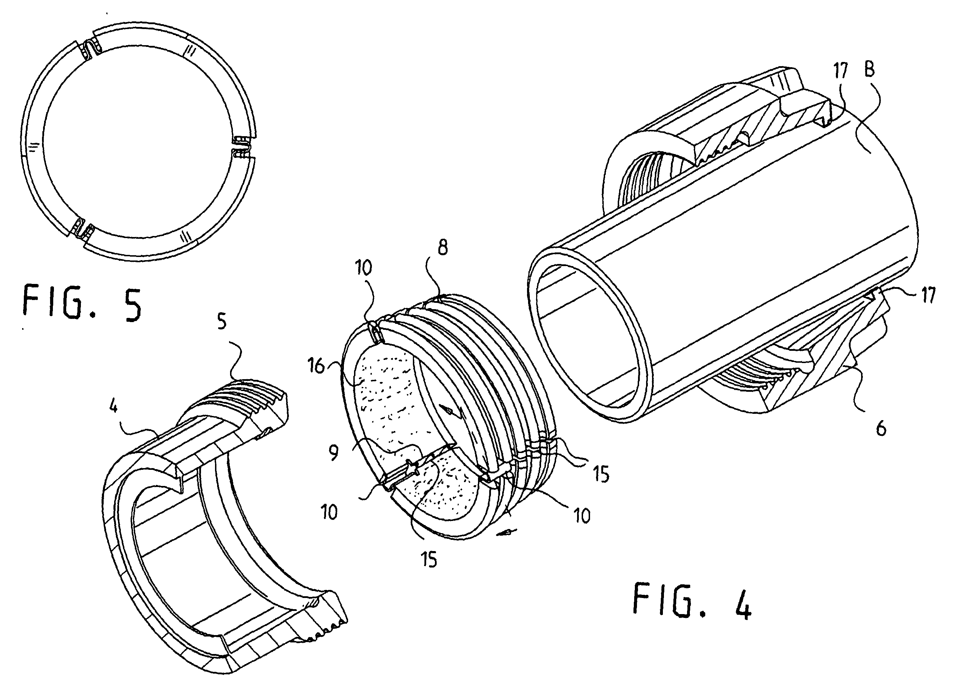

Fig. 3 and 4 show the same components of the tensively strong coupling, wherein however clamping ring 8 is modified. Three gaps are arranged here, each with a bridge piece 10, wherein it is noted that adjacently of the bridge piece the gap 9 is stepped inwardly. This results in two stop surfaces 15 which leave clear a specific interspace in the unloaded situation of the clamping ring. When nut body 6 is tightened, the three sections of clamping ring 8 will move toward each other, wherein stop surfaces 15 come up against each other, thereby defining the minimum inner diameter of ring 8. no overloading of tubular end B can thereby occur. It may also be desired for the same reason to provide nut body 6 with a stop edge 17, so that clamping ring 8 is not pulled out of the nut body in the case of tensile strain, in which case ring 8 would damage the tubular end.

It is possible, as according to fig. 4, to replace the toothing by a roughened surface 16 which also gives a friction-increasing effect on the outer surface of tubular end B.

The inner surface of the ring is determined subject to the type of material of the tubular ends. The number of sections of the ring, i.e. the number of gaps, can also be freely chosen. The peripheral grooves 12 thereof can take a modified form. Sleeve 1 can also take a random form, wherein within the scope of the invention even the screw thread can be replaced by other coupling systems, for instance a bayonet fitting.

## Claims

1. A device for connecting in a tensively strong manner two oppposite, tubular ends (B) of pipes for gas or liquid, said device comprising a sleeve (1) with a screw thread (5), being fitted with clearance over each said pipe end (B), and a pair of nut bodies (6) each embodied with a co-acting screw thread and having an inner periphery (7) narrowing towards the outside for receiving an axially split clamping ring (8), **characterized in that** the or each gap (9) of the clamping ring (8) is provided with a resiliently yielding bridge piece (10), such that the ring (8) narrows in diameter by rotating the nut body (6) against the sleeve (1).

2. Device as claimed in claim 1, **characterized in that** the gap (9) is stepped and thereby forms stop surfaces (15) adjacently of the bridge piece (10) for bounding the minimum inner diameter of the clamping ring (8).

3. Device as claimed in claim 1 or 2, **characterized in that** the clamping ring (8) is provided on the inner surface directed toward the tubes for connecting with a friction-increasing surface such as a toothing (11).

4. Device as claimed in claims 1-3, **characterized in that** the sleeve (1) is embodied with a sealing ring (3) co-acting with a tubular end (B).

5. Device as claimed in any of the foregoing claims, **characterized in that** the clamping ring (8) is manufactured from plastic.

6. Device as claimed in claim 5, **characterized in that** the bridge piece (10) and the ring (8) are manufactured integrally.

7. Device as claimed in claim 6, **characterized in that** the bridge (10) is formed by a strip bent substantially in a U-shape.

8. Device as claimed in any of the foregoing claims, **characterized in that** the clamping ring (8) is provided on the outer side with one or more peripheral grooves (12).

9. Device as claimed in claim 8, **characterized in that** the edges of the peripheral grooves (12) are rounded.

10. Device as claimed in any of the foregoing claims, **characterized in that** the co-acting screw threads of the sleeve (1) respectively the nut body (6) are rounded.

## Patentansprüche

1. Vorrichtung zum Verbinden von zwei gegenüberliegenden Rohr-Enden (B) von Rohrleitungen für Gas oder Flüssigkeit auf eine spannungsstarke Art und Weise, wobei die Vorrichtung eine Muffe (1) mit einem Schraubengewinde (5), welche mit Spiel auf jedes Rohrleitungsende (B) gepasst ist, und ein Paar Mutterkörper (6) aufweist, wobei jeder mit einem zusammenwirkenden Schraubengewinde verwirklicht ist und einen sich nach außen hin verengenden Innenumfang (7) zum Aufnehmen eines axial geschlitzten Klemmrings (8) aufweist, **dadurch gekennzeichnet, dass** die oder jede Lücke (9) des Klemmrings (8) mit einem elastisch nachgebenden Überbrückungsstück (10) versehen ist, sodass sich der Ring (8) durch Drehen des Mutterkörpers (6) gegen die Muffe (1) im Durchmesser verengt.

2. Vorrichtung gemäß Anspruch 1, **dadurch gekennzeichnet, dass** die Lücke (9) gestuft ist und dadurch dem Überbrückungsstück (10) benachbarte Stoppflächen (15) zum Begrenzen des minimalen Innendurchmessers des Klemmrings (8) ausbildet.

3. Vorrichtung gemäß Anspruch 1 oder 2, **dadurch gekennzeichnet, dass** der Klemmring (8) an jener Innenfläche, die den Rohren zum Verbinden zugewandt ist, mit einer reibungs-vergrößernden Fläche wie beispielsweise einer Zahnung (11) versehen ist.

4. Vorrichtung gemäß einem der Ansprüche 1 bis 3, **dadurch gekennzeichnet, dass** die Muffe (1) mit einem Dichtungsring (3) verwirklicht ist, der mit einem Rohr-Ende (B) zusammenwirkt.

5. Vorrichtung gemäß einem der vorhergehenden Ansprüche, **dadurch gekennzeichnet, dass** der Klemmring (8) aus Kunststoff hergestellt ist.

6. Vorrichtung gemäß Anspruch 5, **dadurch gekennzeichnet, dass** das Überbrückungsstück (10) und der Ring (8) einstückig hergestellt sind.

7. Vorrichtung gemäß Anspruch 6, **dadurch gekennzeichnet, dass** die Überbrückung (10) von einem Streifen ausgebildet ist, der im Wesentlichen zu einer U-Gestalt gebogen ist.

8. Vorrichtung gemäß einem der vorhergehenden Ansprüche, **dadurch gekennzeichnet, dass** der Klemmring (8) an der Außenseite mit einer oder mehreren Umfangsnuten (12) versehen ist.

9. Vorrichtung gemäß Anspruch 8, **dadurch gekennzeichnet, dass** die Ränder der Umfangsnuten (12) gerundet sind.

10. Vorrichtung gemäß einem der vorhergehenden Ansprüche , **dadurch gekennzeichnet, dass** die zusammenwirkenden Schraubengewinde der Muffe (1) bzw. des Mutterkörpers (6) gerundet sind.

## Revendications

1. Dispositif de raccordement avec fort serrage de deux extrémités tubulaires opposées (B) de conduites de gaz ou de liquide, ledit dispositif comprenant un manchon (1) doté d'un filetage (5) et monté avec un jeu par dessus chaque extrémité de conduite (B), et une paire de corps formant écrou (6) comportant chacun un filetage, les filetages coopérant l'un avec l'autre, et présentant une périphérie intérieure (7) se rétrécissant vers l'extérieur en vue de recevoir une bague de serrage (8) fendue axialement, **caractérisé en ce que** l'espace ou chaque espace (9) de la bague de serrage (8) est doté d'une pièce de pontage (10) s'affaissant de façon élastique de sorte que la bague (8) voit son diamètre se réduire lorsque l'on fait tourner le corps formant écrou (6) contre le manchon (1).

2. Dispositif selon la revendication 1, **caractérisé en ce que** l'espace (9) est conformé en gradins et forme par conséquent des surfaces de butée (15) à proximité de la pièce de pontage (10) en vue de limiter le diamètre intérieur minimum de la bague de serrage (8).

3. Dispositif selon la revendication 1 ou 2, **caractérisé en ce que** la bague de serrage (8) est prévue sur la surface intérieure dirigée vers les tubes en vue du raccordement à une surface à friction croissante telle qu'une denture (11).

4. Dispositif selon les revendications 1 à 3, **caractérisé en ce que** le manchon (1) est doté d'une bague d'étanchéité (3) coopérant avec une extrémité tubulaire (B).

5. Dispositif selon l'une quelconque des revendications précédentes, **caractérisé en ce que** la bague de serrage (8) est en matière plastique.

6. Dispositif selon la revendication 5, **caractérisé en ce que** la pièce de pontage (10) et la bague (8) sont en venue de matière.

7. Dispositif selon la revendication 6, **caractérisé en ce que** la pièce de pontage (10) est formée par une bande incurvée sensiblement en U.

8. Dispositif selon l'une quelconque des revendications précédentes, **caractérisé en ce que** la bague de serrage (8) est dotée sur le côté extérieur d'une ou plusieurs gorges périphériques (12).

9. Dispositif selon la revendication 8, **caractérisé en ce que** les bords des gorges périphériques (12) sont arrondies.

10. Dispositif selon l'une quelconque des revendications précédentes, **caractérisé en ce que** les filetages, coopérant l'un avec l'autre, du manchon (1) respectivement du corps formant écrou (6) sont arrondis.
